# FASCICULE DE BREVET EUROPEEN

(11) **EP 1 001 913 B1**
(45) Date de publication et mention de la délivrance du brevet: **16.06.2004**
(21) Numéro de dépôt: 98930569.3
(22) Date de dépôt: 07.07.1998
(51) Int. Cl.: C03C 1/02, B29B 17/02, B03B 9/06

(54) **PROCEDE ET INSTALLATION DE TRAITEMENT DE VERRE FEUILLETE**
VERFAHREN UND VORRICHTUNG ZUR BEHANDLUNG VON VERBUNDGLAS
METHOD AND INSTALLATION FOR TREATING LAMINATED GLASS

(30) Priorité: 07.07.1997 BE 9700581
(43) Date de publication de la demande: 24.05.2000
(73) Titulaire: Debailleul, Gérard, 1703 Schepdaal (BE)
(72) Inventeur: Debailleul, Gérard, 1703 Schepdaal (BE)
(74) Mandataire: Claeys, Pierre
(86) Numéro de dépôt international: PCT/BE1998/000103
(87) Numéro de publication internationale: WO 1999/002460

(56) Documents cités:
- EP-A- 0 567 876
- EP-A- 0 792 730
- EP-A- 0 850 743
- DE-C- 19 509 244

## Description

La présente invention est relative à un procédé de traitement de verre feuilleté et à une installation pour la mise en oeuvre de ce procédé.

Par verre feuilleté il faut entendre un produit constitué par deux ou plusieurs feuilles de verre étiré, glace ou verre coulé, réunies sur toute leur surface par un ou plusieurs intercalaires qui ne sont pas en verre. Ceux-ci peuvent par exemple en cas de bris jouer le rôle d'armature qui retient les fragments de verre et assure à l'ensemble une résistance résiduelle. On utilise du verre feuilleté en particulier dans la fabrication des pare-brise de véhicules, tels que voitures automobiles, avions, paquebots, etc:., ou de vitrage de sécurité, notamment pour les guichets d'agences bancaires.

Jusqu'à présent le verre feuilleté représente un déchet non réutilisable ou peu réutilisable. En effet, actuellement on écrase par exemple les pare-brise de rebut en tes faisant passer à travers deux rouleaux presseurs. Il pourrait alors être possible de récupérer certains fragments de verre qui se sont séparés des feuilles intercalaires et de les recycler, mais d'une manière générale le tout est simplement expédié vers une décharge. Le risque de la présence de résidus de matières plastiques par exemple, avec les fragments de verre, dans les opérations courantes de recyclage du verre, rend inapproprié le verre feuilleté pour une revalorisation en verre de réemploi.

On connaît un procédé de traitement de verre feuilleté dans lequel le verre est séparé mécaniquement de la feuille intercalaire par une préfragmentation mécanique, les résidus de verre subsistant sur la feuille étant éliminés par lavage (v. EP-A-0567876). On connaît aussi un procédé de séparation du verre et de la matière non en verre d'un verre feuilleté par un broyage mécanique fin, sans traitement chimique. (v. DE-C-19509244).

La présenté invention a pour but d'offrir une solution à ce problème, en permettant simultanément de récupérer et de recycler éventuellement la matière dans laquelle sont faits les éléments intercalaires du verre feuilleté. Avantageusement, le procédé et l'installation de traitement mis en oeuvre à cet effet ne doivent pas occasionner un autre problème important de pollution de l'environnement.

Suivant l'invention on résout le problème posé, par un procédé de traitement de verre feuilleté, comprenant au moins deux feuilles de verre entre lesquelles est agencée au moins une feuille intercalaire en une matière non en verre, ce procédé comprenant
- une fragmentation de verre,
- une attaque par une solution basique après ladite fragmentation de verre, et
- une séparation de solution basique, de verre et de matière non en verre,
ce procédé étant caractérisé en ce que la fragmentation comprend une fragmentation du verre feuilleté, avec formation de fragments de verre feuilleté, en ce que l'attaque comprend une attaque de tout le verre feuilleté en fragments provenant de la fragmentation, de manière à obtenir un milieu d'attaque dans lequel a lieu une désolidarisation, dans tous les fragments susdits provenant de la fragmentation, de fragments de verre non feuilleté et de fragments de ladite matière non en verre, en ce que la séparation comprend une séparation entre a) la solution basique, b) les fragments de verre non feuilleté ayant subi une attaque par la solution basique et c) les fragments de la matière non en verre ayant subi une attaque par la solution basique et en ce que le procédé comprend en outre une neutralisation des fragments désolidarisés b) et c), avant un éventuel recyclage ou revalorisation de ceux-ci.

On obtient ainsi par le procédé suivant l'invention une désolidarisation entre le verre et la matière dont sont formées les feuilles intercalaires. Le verre et la matière non en verre sont parfaitement propres à la sortie du procédé. Ils se trouvent sous la. forme de petits fragments immédiatement réutilisables dans les circuits verriers et respectivement des matières non en verre. Ce procédé chimique présente la particularité qu'il n'entraîne pas une réaction chimique entre la solution basique et les fragments et que la solution basique reste quasiment inaltérée après le traitement, en pouvant donc être réutilisée à plusieurs reprises pour des opérations successives.

La solution basique d'attaque peut être une solution aqueuse d'un agent générateur d'ions OH⁻ soluble dans l'eau, notamment d'une base alcaline ou alcalino-terreuse, de préférence de NaOH ou de KOH. Avantageusement la solution basique d'attaque est une solution aqueuse de NaOH 5 à 15 molaires, de préférence environ 10 molaires.

Par verre on peut entendre suivant l'invention tout type de verre non composite, qu'il soit étiré, coulé, teinté, transparent, translucide ou opaque, gravé, ou traité d'une autre manière.

Par matière non en verre, on peut entendre suivant l'invention n'importe quelle matière dont sont faites les feuilles intercalaires destinées à la fabrication du verre feuilleté. On peut citer par exemple du polyvinylbutyral.

Suivant un mode de réalisation du procédé suivant l'invention, ladite séparation comprend une sédimentation d'un mélange des fragments désolidarisés b) et c), préalablement séparés de la solution basique, dans un liquide de sédimentation dans lequel les fragments désolidarisés de verre non feuilleté ayant subi une attaque par la solution basique b) se déposent et les fragments désolidarisés de matière non en verre ayant subi une attaque par la solution basique c) surnagent, et une récolte séparée des fragments désolidarisés b) et des fragments désolidarisés c). Ce mode de réalisation tire avantageusement profit de la différence de densité entre le verre et la matière non en verre des feuilles intercalaires ayant subi une attaque par la solution basique pour les séparer aisément par un simple procédé de sédimentation. Le liquide utilisé peut avantageusement être simplement de l'eau. De préférence, ce liquide ne réagit en aucune façon ni avec les fragments de verre, ni avec les fragments de matière non en verre, et son utilisation prolongée et/ou son recyclage peuvent aisément être prévus.

Suivant un autre mode de réalisation suivant l'invention, le procédé comprend ladite neutralisation d'un mélange des fragments désolidarisés b) et c), préalablement séparés de la solution basique, par une solution diluée d'acide non agressif pour le verre et la matière transparente non en verre. Par acide non agressif on peut entendre un acide faible, en particulier de l'acide phosphorique. Cet acide peut aussi servir, à l'occasion, lorsque la solution basique d'attaque devient trop chargée, à neutraliser la solution basique usée et former ainsi une solution aqueuse de phosphate de sodium, éventuellement réutilisable à son tour, par exemple dans le domaine de la fabrication d'engrais.

D'autres modes de réalisation du procédé suivant l'invention sont indiqués dans les revendications 1 à 8.

La présente invention concerne également une installation pour la mise en oeuvre du procédé de traitement de verre feuilleté précédemment indiqué. Cette installation comprend
- un dispositif de fragmentation de verre feuilleté capable de fragmenter celui-ci en morceaux de verre feuilleté,
- une source de solution basique d'attaque,
- un réacteur dans lequel sont introduits les morceaux de verre feuilleté provenant du dispositif de fragmentation et une solution basique d'attaque provenant de ladite source, et qui, en position fermée, peut être chauffé et mis sous pression, de manière que la solution basique puisse former un milieu d'attaque où a lieu une désolidarisation, dans les fragments provenant du dispositif de fragmentation, de fragments de verre non feuilleté et de fragments de ladite matière non en verre,
- un dispositif de séparation permettant de séparer a) la solution basique, b) les fragments désolidarisés de verre non feuilleté ayant subi une attaque par la solution basique et c) les fragments désolidarisés de ladite matière non en verre ayant subi une attaque par la solution basique, et
- une source d'agent de neutralisation permettant une neutralisation des fragments désolidarisés b) et c), avant leur éventuel recyclage ou revalorisation.

Cette installation, relativement simple, est d'un coût tout à fait défendable alors qu'elle permet une revalorisation de chacun des éléments constitutifs du verre feuilleté. On peut même prévoir une telle installation sur une ou deux plate-forme de semi-remorque et disposer ainsi d'une installation transportable de décharge en décharge.

Par dispositif de fragmentation, on peut entendre n'importe quel broyeur, par exemple à couteaux, marteaux ou boulets, ainsi que tout dispositif d'écrasement, éventuellement un micronisateur.

D'autres formes de réalisation de l'installation suivant l'invention sont indiquées dans les revendications 9 à 15.

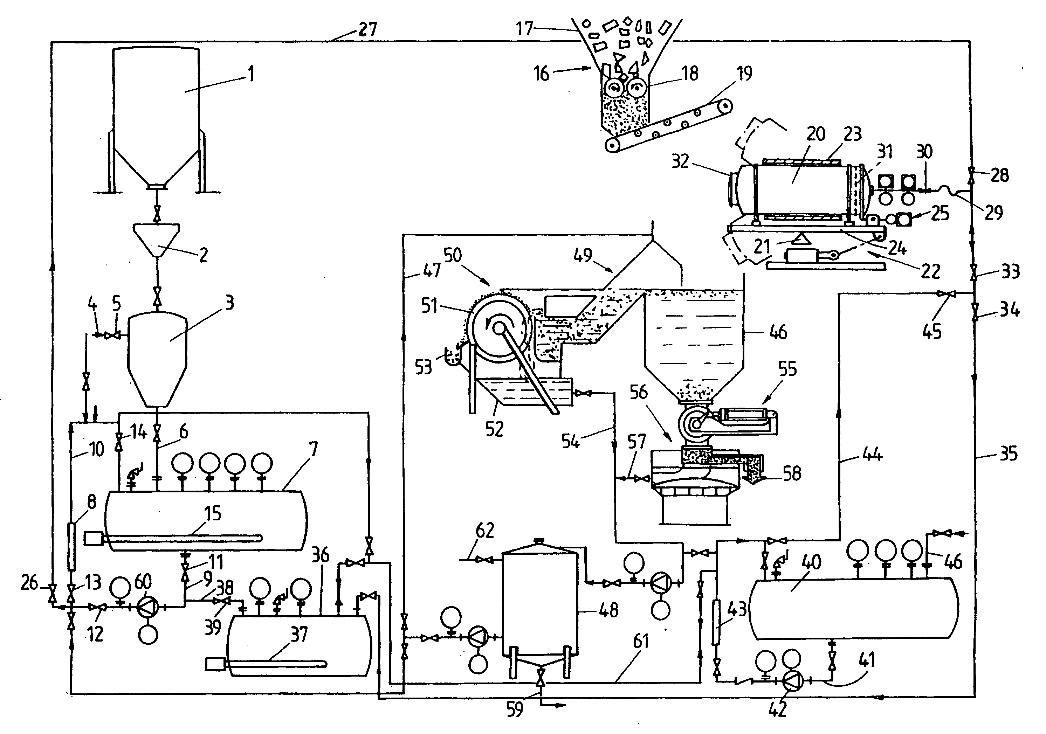

D'autres détails et particularités de l'invention ressortiront de la description donnée ci-après, à titre non limitatif, avec référence à la figure unique annexée.

La figure unique représente d'une manière schématique une installation suivant l'invention.

La solution basique, par exemple de soude caustique, est préparée d'une manière quelconque connue de l'homme de métier. On peut par exemple se référer pour cela à la demande de brevet internationale WO-97/00099.

Dans l'exemple illustré, on introduit et stocke dans le silo 1 des paillettes ou perles de soude caustique. Par l'intermédiaire d'un doseur 2, la soude caustique est transférée dans un vase sous pression 3, dans lequel de l'eau est injectée par le raccord 4, obturable par une vanne 5. L'eau n'est injectée dans le vase 3 que pour la première préparation de solution basique d'attaque. Lors des préparations suivantes on peut remplacer l'eau totalement ou partiellement par de la solution basique précédemment préparée. La solution basique est alors transférée par le conduit 6 dans une cuve de préparation 7. Celle-ci est remplie progressivement pour éviter les chocs thermiques, l'exothermie de la réaction entre la soude et l'eau provoquant une température de l'ordre de 80°C. Un mélangeur statique 8 permet par un jeu de conduits 9 et 10 et de vannes 11, 12, 13 et 14 un mouvement permanent de la solution basique contenue dans la cuve de préparation 7. Un élément chauffant 15 permet d'atteindre progressivement une solution basique d'une température d'environ 200°C.

Les déchets de verre sont introduits dans un broyeur 16 par l'intermédiaire d'une trémie 17 qui conduit le verre feuilleté entre deux rouleaux d'écrasement 18. Ceux-ci broient le verre feuilleté en petits fragments qui sont amenés sur une bande transporteuse 19.

Le réacteur 20 est monté sur une plate-forme basculable 24 autour d'un axe 21. Le mouvement de basculement est engendré de manière connue par exemple sous l'action d'un vérin hydraulique ou pneumatique et de bielles, désignés d'une manière générale par la référence 22.

Le réacteur est enveloppé au moins partiellement par une enceinte chauffante 23 et il est monté sur la plate-forme 24 de manière à pouvoir tourner autour de son axe longitudinal sous l'action d'un moteur d'entraînement 25.

Le fond du réacteur 20 est relié à la cuve de préparation 7 par le conduit 9, la pompe 60, la vanne 12, une vanne 26, le conduit d'alimentation 27, une vanne 28, un tuyau flexible 29, et une vanne 30. A l'intérieur du réacteur, devant l'orifice où débouche le tuyau flexible 29 dans le réacteur 20, celui-ci est pourvu d'un filtre 31 représenté schématiquement par un trait interrompu. La tête du réacteur est munie d'une porte 32 amovible entre une position ouverte et une position fermée. Les parois du réacteur peuvent être pourvues de pointes pyramidales et/ou d'une chaîne battante pour améliorer l'effet de broyage.

Par la vanne 30 et le tuyau flexible 29, ainsi que par les vannes 33 et 34 et le conduit de recyclage 35, le fond du réacteur 20 est aussi en communication avec une cuve tampon 36, munie d'un élément chauffant 37. Celle-ci est à son tour en communication avec la cuve de préparation 7 par le conduit 38 et la vanne 39. La cuve tampon permet un recyclage de la solution basique d'attaque et l'ajustement de la molarité de la solution basique réalimentée dans le circuit d'alimentation s'effectue par l'intermédiaire de la cuve de préparation 7.

Une cuve de neutralisation 40 remplie d'une solution aqueuse diluée d'acide phosphorique est reliée au fond du réacteur par le conduit 41, la pompe 42, le mélangeur statique 43, le conduit d'alimentation 44, la vanne 45, la vanne 33, le tuyau flexible 29 et la vanne 30. L'acide phosphorique frais est alimenté dans la cuve de neutralisation par le conduit 46. La cuve tampon 36 et la cuve de neutralisation 40 peuvent communiquer entre elles par un conduit de transfert 61.

En dessous du réacteur 20 est agencée une cuve de sédimentation 46 qui est alimentée en liquide de sédimentation, notamment en eau, par un conduit à eau 47 provenant d'une cuve à eau 48. Dans le liquide de sédimentation, les fragments de matière plastique des éléments intercalaires ayant subi une attaque par la solution basique flottent tandis que le verre se dépose au fond de la cuve.

Un trop-plein 49 est agencé latéralement, au haut de la cuve. Les fragments de matière non en verre sont entraînés, par l'intermédiaire de ce trop-plein 49, avec une partie de l'eau de sédimentation, dans un séparateur eau - matière non en verre 50. Celui-ci est constitué d'un tambour perforé 51, munis de petits crochets qui entraînent les fragments par exemple en matière plastique. L'eau s'écoule par les perforations dans la cuve de récolte d'eau 52. La matière plastique est retenue par des éléments racleurs dans une gouttière d'évacuation 53. L'eau de la cuve de récolte 52 peut être recyclée dans la cuve à eau 48, par le conduit de recyclage 54.

Au fond de la cuve de sédimentation se trouve une vanne 55, par exemple un tiroir qui peut laisser passer le reste d'eau de la cuve de sédimentation 46 et le dépôt de verre dans un séparateur eau - verre, par exemple un séparateur vibrant 56. L'eau est évacuée par le fond, au travers d'un tamis vibrant et elle peut être recyclée dans la cuve à eau 48 par le conduit 57 qui débouche dans le conduit de recyclage 54.

Par le tamis vibrant, les fragments de verre sont déplacés latéralement vers une sortie 58.

La cuve à eau 48 est munie à son fond d'un conduit de sortie 59 pour les eaux usées et à son sommet d'un conduit 62 pour l'introduction d'eau fraîche.

Le fonctionnement de cette installation va à présent être décrit à l'aide d'un exemple de réalisation donné uniquement à titre illustratif.

Des verres feuilletés issus des déchets de pare-brise de voitures et de verres de sécurité venant de la démolition d'agences bancaires sont tout d'abord déchiquetés dans le broyeur 16.

Un réacteur 20 d'une contenance par exemple de 2m³ est redressé avec sa tête vers le haut (voir représentation en traits interrompus). La porte 32 peut alors être ouverte et les fragments de verre feuilleté peuvent être chargés dans le réacteur 20 par la bande transporteuse 19. Après chargement d'environ les 2/3 du volume du réacteur, la porte 32 est fermée, le réacteur est basculé à nouveau dans sa position horizontale.

De la solution basique de NaOH à une concentration environ 10 molaires est envoyée de la cuve de préparation 7 au réacteur 20 par le conduit d'alimentation 27, de façon à remplir le volume du réacteur aux 3/4.

Le réacteur 20 est alors amené à tourner autour de son axe à une vitesse par exemple de 25 tours par minute. La température à l'intérieur du réacteur est maintenue inférieure à la température de dégradation du verre et de la matière non en verre dont sont faits les éléments intercalaires du verre feuilleté. La température est avantageusement supérieure à 180°C, de préférence d'environ 200°C.

Une pression de vapeur d'au moins 8 bars, avantageusement de 10 à 20 bars, de préférence d'environ 15 bars, s'installe.

Après 15 minutes de réaction, une désolidarisation entre le verre et la matière plastique formant les intercalaires a eu lieu. A ce moment la vanne 30 est ouverte et la solution basique d'attaque est recyclée par le conduit 35 vers la cuve tampon 13 en passant à travers le filtre 31 agencé au fond du réacteur. Les fragments de verre non feuilleté et de matière plastique sont ainsi retenus dans le réacteur. La solution basique sortant du réacteur n'est que faiblement appauvrie et la revitalisation en NaOH est inférieure à 2 %. NaOH n'a donc pas réagi avec les composants du verre feuilleté, mais à permis leur désolidarisation par une réaction thermochimique.

De l'acide phosphorique dilué en provenance de la cuve de neutralisation 40 est alors envoyé dans le réacteur 20 contenant encore les fragments désolidarisés. Le réacteur est amené à tourner à nouveau pendant quelques tours tandis que la pression est supprimée. Les fragments de verre non feuilleté et de matière plastique sont ainsi ramenés à un pH neutre de l'ordre de 6 à 8.

Le réacteur est alors basculé la tête vers le bas (voir représentation en traits interrompus) et la porte 32 est ouverte. Le contenu du réacteur, c'est-à-dire les fragments neutralisés et une petite solution de phosphate de sodium, est déversé dans la cuve de sédimentation 9, dont la vanne 55 est fermée.

La cuve de sédimentation 9 est alors alimentée en eau depuis la cuve à eau 48 et par le conduit 47. Les fragments de matière plastique flottent dans l'eau et sont entraînés dans le trop-plein 49 vers le séparateur 50, tandis que les fragments de verre non feuilleté se déposent au fond de la cuve 46.

Lorsque l'eau de sédimentation ne contient plus de fragments surnageants, l'alimentation en eau est coupée et la vanne 55 est ouverte. L'eau et les fragments de verre sont alors séparés dans le séparateur 56.

Les fragments de matière plastique, sous forme de pastilles recroquevillées, et les fragments de verre non feuilleté sont tout a fait prêts pour être dirigés vers les industries de revalorisation ou de recyclage correspondantes.

La solution basique de la cuve tampon 36 est transférée à la cuve de préparation 7 où elle est égalisée du point de vue concentration molaire, et un nouveau traitement peut commencer. Un circuit complet dure environ 30 minutes. Avec un réacteur de 2m³ on peut prévoir un traitement de 3 tonnes à l'heure.

Après un certain nombre de traitements, la solution basique d'attaque trop chargée doit être neutralisée. La solution de la cuve 7 est refroidie. Elle est transférée à la cuve tampon 36 puis à la cuve de neutralisation 40. Le liquide neutralisé est transféré vers la cuve d'eau 48. L'eau est immobilisée pendant un certain temps pour permettre une décantation. Des eaux usées contenant principalement du phosphate de sodium sont alors évacuées par le bas par le conduit 59.

En résumé le procédé et l'installation suivant l'invention permettent d'utiliser pendant un grand nombre de cycles la même solution basique d'attaque. Les matières à valoriser sont séparées, et surtout ne sont pas altérées par cette attaque. Celle-ci les restitue propres et prêtes au recyclage, en petits fragments. On n'a à craindre aucun rejet ni dans l'atmosphère, ni dans les décharges, sinon de temps en temps une évacuation d'une solution de phosphate de sodium. Le traitement se fait donc en circuit quasiment fermé. La consommation d'eau est très faible.

Il doit être entendu que la présente invention n'est en aucune façon limitée à la forme de réalisation indiquée ci-dessus et que bien des modifications peuvent y être apportées sans sortir du cadre des revendications annexées.

## Revendications

1. Procédé de traitement de verre feuilleté, comprenant au moins deux feuilles de verre entre lesquelles est agencée au moins une feuille intercalaire en une matière non en verre, ce procédé comprenant
- une fragmentation de verre,
- une attaque par une solution basique après ladite fragmentation de verre, et
- une séparation de solution basique, de verre et de matière non en verre,
**caractérisé en ce que** la fragmentation comprend une fragmentation du verre feuilleté à traiter, avec formation de fragments de verre feuilleté, **en ce que** l'attaque comprend une attaque de tout le verre feuilleté en fragments provenant de la fragmentation, de manière à obtenir un milieu d'attaque dans lequel a lieu une désolidarisation, dans tous les fragments susdits provenant de la fragmentation, de fragments de verre non feuilleté et de fragments de ladite matière non en verre, **en ce que** la séparation comprend une séparation entre a) la solution basique, b) les fragments de verre non feuilleté ayant subi une attaque par la solution basique et c) les fragments de la matière non en verre ayant subi une attaque par la solution basique et **en ce que** le procédé comprend en outre une neutralisation des fragments désolidarisés b) et c), avant un éventuel recyclage ou revalorisation de ceux-ci.

2. Procédé suivant ta revendication 1, **caractérisé en ce que** ladite séparation comprend une filtration du milieu d'attaque après désolidarisation, et une récolte séparée d'un filtrat formé par la solution basique et d'un mélange des fragments désolidarisés b) et c).

3. Procédé suivant l'une ou l'autre des revendications 1 et 2, **caractérisé en ce que** ladite séparation comprend une sédimentation d'un mélange des fragments désolidarisés b) et c), préalablement séparés de la solution basique, dans un liquide de sédimentation dans lequel les fragments désolidarisés de verre non feuilleté b) se déposent et les fragments désolidarisés de matière non en verre c) surnagent, et une récolte séparée des fragments désolidarisés b) et des fragments désolidarisés c).

4. Procédé suivant la revendication 3, **caractérisé en ce que** la récolte séparée susdite comprend un isolement du liquide de sédimentation entraîné avec les fragments désolidarisés b) et respectivement les fragments désolidarisés c), récoltés, et **en ce que** le procédé comprend en outre un éventuel recyclage du liquide de sédimentation isolé vers ladite sédimentation.

5. Procédé suivant l'une quelconque des revendications 1 à 4, **caractérisé en ce qu'**il comprend un recyclage de la solution basique issue de ladite séparation vers ladite attaque du verre feuilleté en fragments.

6. Procédé suivant l'une quelconque des revendications 1 à 5, **caractérisé en ce qu'**il comprend l'attaque du verre feuilleté en fragments par une solution basique aqueuse sous une pression de vapeur d'au moins 8 bars, avantageusement de 10 à 20 bars, de préférence d'environ 15 bars, et à une température comprise entre 180°C et une température de dégradation du verre ou de ladite matière non en verre, avantageusement d'environ 200°C, et une agitation du milieu d'attaque pendant ladite attaque.

7. Procédé suivant l'une quelconque des revendications 1 à 6, **caractérisé en ce que** la solution basique de l'attaque est une solution aqueuse de NaOH 5 à 15 molaires, de préférence environ 10 molaires.

8. Procédé suivant l'une quelconque des revendications 1 à 7, **caractérisé en ce qu'**il comprend ladite neutralisation d'un mélange des fragments désolidarisés b) et c), préalablement séparés de la solution basique, par une solution diluée d'acide non agressif pour le verre et la matière non en verre.

9. Installation pour la mise en oeuvre du procédé de traitement de verre feuilleté suivant l'une quelconque des revendications 1 à 8, **caractérisée en ce qu'**elle comprend
- un dispositif de fragmentation (16) de verre feuilleté capable de fragmenter celui-ci en morceaux de verre feuilleté,
- une source (7) de solution basique d'attaque,
- un réacteur (20) dans lequel sont introduits les morceaux de verre feuilleté provenant du dispositif de fragmentation (16) et une solution basique d'attaque provenant de ladite source (7), et qui, en position fermée, peut être chauffé et mis sous pression, de manière que la solution basique puisse former un milieu d'attaque où a lieu une désolidarisation, dans tous les fragments provenant du dispositif de fragmentation, de fragments de verre non feuilleté et de fragments de ladite matière non en verre,
- un dispositif de séparation (31, 46, 50, 56) permettant de séparer a) la solution basique, b) les fragments désolidarisés de verre non feuilleté ayant subi l'attaque par la solution basique et c) les fragments désolidarisés de ladite matière transparente non en verre ayant subi l'attaque par la solution basique, et
- une source (40) d'agent de neutralisation permettant une neutralisation des fragments désolidarisés b) et c), avant leur éventuel recyclage ou revalorisation.

10. Installation suivant la revendication 9, **caractérisée en ce que** le réacteur (20) présente une première ouverture obturable et **en ce que** ledit dispositif de séparation comprend un filtre (31) qui est agencé dans le réacteur devant ladite première ouverture et qui, en position d'ouverture de ladite première ouverture, est capable de séparer le milieu d'attaque en , d'une part, la solution basique sous la forme d'un filtrat évacué du réacteur et, d'autre part, les fragments désolidarisés de verre non feuilleté b) et les fragments désolidarisés de matière non en verre c) qui sont retenus à l'intérieur du réacteur.

11. Installation suivant l'une ou l'autre des revendications 9 et 10, **caractérisée en ce que** le réacteur (20) présente une deuxième ouverture obturable (32) par laquelle les fragments de verre feuilleté peuvent être introduits dans le réacteur et un mélange de fragments désolidarisés b) et c) peut être évacué de celui-ci.

12. Installation suivant l'une quelconque des revendications 9 à 11, **caractérisée en ce que** le dispositif de séparation comprend une cuve dé sédimentation (46) contenant un liquide de sédimentation dans lequel est introduit un mélange de fragments désolidarisés b) et c) provenant du réacteur (20) et dans lequel les fragments désolidarisés de verre non feuilleté b) se déposent et les fragments désolidarisés de matière non en verre c) surnagent.

13. Installation suivant la revendication 12, **caractérisée en ce que** la cuve de sédimentation (46) comprend, dans sa partie supérieure un conduit d'évacuation (49) des fragments désolidarisés c) surnageants et de liquide de sédimentation qui est en communication avec un séparateur (50) capable d'extraire les fragments désolidarisés c) du liquide de sédimentation dans lequel ils surnagent.

14. Installation suivant l'une des revendications 12 et 13, **caractérisée en ce que** la cuve de sédimentation (46) comprend, au fond, un orifice obturable par lequel les fragments désolidarisés b) déposés et du liquide de sédimentation peuvent passer, en position d'ouverture de l'orifice, et qui est en communication avec un séparateur (56) capable d'extraire les fragments désolidarisés b) du liquide de sédimentation.

15. Installation suivant l'une quelconque des revendications 9 à 14, **caractérisée en ce que** la source d'argent de neutralisation est une cuve (40) qui contient une solution aqueuse d'acide non agressive pour le verre et la matière non en verre et qui peut être mise en communication avec le réacteur après séparation de la solution basique a) à partir du milieu d'attaque.

## Claims

1. Process for processing interleaved glass comprising at least two sheets of glass between which at least one intermediate layer made of a non-glass material is placed, the said process comprising
- fragmentation of glass,
- an attack by a basic solution after said glass fragmentation, and,
- separation of basic solution, glass and non-glass material,
**characterised by** the fact that the fragmentation includes a fragmentation of the interleaved glass to be processed, that the attack includes an attack on all the interleaved glass in fragments originating from the fragmentation, in such a way as to obtain an attack medium in which a disassociation takes place, in all the said fragments originating from fragmentation, of non-interleaved fragments of glass and fragments of the said non-glass material, that the separation comprises separation between a) the basic solution, b) the fragments of non-interleaved glass that have undergone attack by the basic solution and c) the fragments of non-glass material that have undergone attack by the basic solution, and that the process also includes neutralisation of the disassociated fragments b) and c), before any recycling or reuse thereof.

2. Process according to Claim 1, **characterised by** the fact that the said separation includes filtering of the attack medium after disassociation, and separate collection of a filtrate formed by the basic solution and a mix of the disassociated fragments b) and c).

3. Process according to one or the other of Claims 1 and 2, **characterised by** the fact that the said separation comprises sedimentation of a mix of the disassociated fragments b) and c), previously separated from the basic solution, in a sedimentation liquid in which the disassociated fragments of non-interleaved glass b) are deposited and the disassociated fragments of non-glass material c) float, and separate collection of the disassociated fragments b) and the disassociated fragments c).

4. Process according to Claim 3, **characterised by** the fact that the said separate collection includes isolation of the sedimentation liquid drawn with the disassociated fragments b) and the disassociated fragments c) collected, and that the process also includes possible recycling of the isolated sedimentation liquid to said sedimentation.

5. Process according to any one of Claims 1 to 4, **characterised by** the fact that it comprises recycling of the basic solution resulting from the said separation to the said attack on interleaved glass in fragments.

6. Process according to any one of Claims 1 to 5, **characterised by** the fact that it comprises attack on interleaved glass in fragments with a basic water-solution under a vapour pressure of at least 8 bars, advantageously from 10 to 20 bars, preferably about 15 bars, and at a temperature lying between 180ºC and a degradation temperature of the glass or the said non-glass material, advantageously about 200ºC, with agitation of the attack medium during the said attack.

7. Process according to any one of Claims 1 to 6, **characterised by** the fact that the basic attack solution is a water-solution of 5 to 15 molar, preferably about 10 molar, NaOH.

8. Process according to any one of Claims 1 to 7, **characterised by** the fact that it comprises the said neutralisation of a mix of the disassociated fragments b) and c), previously separated from the basic solution, with a dilute solution of acid not aggressive for glass and/or the non-glass material.

9. Plant for implementation of the process for processing interleaved glass according to any one of Claims 1 to 8, **characterised by** the fact that it includes
- a device for fragmentation (16) of interleaved glass, able to fragment the interleaved glass in interleaved glass fragments,
- a source (7) of attack basic solution,
- a reactor (20) into which the interleaved glass fragments issuing from the fragmentation device (16) and an attack basic solution issuing from said source (7) are introduced and which, in closed position, can be heated and pressurized, so as the basic solution can form an attack medium in which disassociation takes place, in all the fragments issuing from the fragmentation device, of fragments of non-interleaved glass and fragments of the said non-glass material,
- a separation device (31, 46, 50, 56) allowing a) the basic solution, b) the disassociated fragments of non-interleaved glass having undergone attack by the basic solution and c) the disassociated fragments of the said non-glass transparent material having undergone attack by the basic solution to be separated, and
- a source (40) of neutralising agent allowing neutralisation of the disassociated fragments b) and c) before their possible recycling or reuse.

10. Plant according to Claim 9, **characterised by** the fact that the reactor (20) presents a first blockable opening and in which the said separation device includes a filter (31), which is located in the reactor in front of the said first opening and which, when the said first opening is in open position, is capable of separating the attack medium into, on the one hand, the basic solution in the form of a filtrate evacuated from the reactor and, on the other hand, the disassociated fragments of non-interleaved glass b) and the disassociated fragments of non-glass material c), which are retained inside the reactor.

11. Plant according to one or the other of Claims 9 and 10, **characterised by** the fact that the reactor (20) has a second blockable opening (32) through which the interleaved glass fragments can be introduced into the reactor and a mix of disassociated fragments b) and c) can be evacuated from it.

12. Plant according to any one of Claims 9 to 11, **characterised by** the fact that the separation device comprises a sedimentation tank (46) containing a sedimentation liquid into which a mix of disassociated fragments b) and c) coming from the reactor (20) is introduced and in which the disassociated fragments of non-interleaved glass b) settle and the disassociated fragments of non-glass material c) float.

13. Plant according to Claim 12, **characterised by** the fact that the sedimentation tank (46) has in its upper part a pipe for the removal (49) of the floating disassociated fragments c) and sedimentation liquid, the said pipe communicating with a separator (50) capable of extracting the disassociated fragments c) from the sedimentation liquid in which they are floating.

14. Plant according to either of Claims 12 and 13, **characterised by** the fact that the sedimentation tank (46) comprises at the bottom a blockable orifice through which the disassociated fragments b) that are deposited and the sedimentation liquid can pass when the orifice is in open position, and which is in communication with a separator (56) capable of extracting the disassociated fragments b) from the sedimentation liquid.

15. Plant according to any one of Claims 9 to 14, **characterised by** the fact that the source of neutralising agent is a tank (40) containing a water-solution of acid not aggressive for glass and the non-glass material and which can be put into communication with the reactor after separation of the basic solution a) from the attack medium.

## Patentansprüche

1. Verfahren zur Behandlung von Verbundglas, das wenigstens zwei Glasplatten aufweist, zwischen denen wenigstens eine Zwischenfolie aus einem nicht glasförmigen Material angeordnet ist, wobei dieses Verfahren aufweist:
- eine Zerkleinerung von Glas,
- ein Angriff durch eine basische Lösung nach der Glaszerkleinerung, und
- eine Separierung von basischer Lösung, Glas und nicht glasförmigem Material,
**dadurch gekennzeichnet, dass** die Zerkleinerung eine Zerkleinerung des zu behandelnden Verbundglases mit Bildung von Verbundglasfragmenten umfasst, dass der Angriff einen Angriff des gesamten Verbundglases in Fragmenten, die aus der Zerkleinerung stammen, umfasst, derart, dass ein Angriffsmilieu erhalten wird, in dem in allen oben genannten aus der Zerkleinerung stammenden Fragmenten eine Abtrennung stattfindet von Fragmenten aus Nicht-Verbundglas und Fragmenten des nicht-glasförmigen Materials, dass die Separierung eine Separierung zwischen a) der basischen Lösung, b) den Nicht-Verbundglasfragmenten, die einem Angriff durch die basische Lösung ausgesetzt waren, und c) den Fragmenten des nicht-glasförmigen Materials, die einen Angriff durch die basische Lösung erfahren haben, umfasst, und dass das Verfahren außerdem eine Neutralisierung der abgetrennten Fragmente b) und c) vor einem eventuellen Rückführen oder einer Wiederverwertung von diesen aufweist.

2. Verfahren nach Anspruch 1, **dadurch gekennzeichnet, dass** die Separierung ein Filtern des Angriffmilieus nach der Abtrennung und eine separate Gewinnung eines durch die basische Lösung gebildeten Filtrats und einer Mischung der abgetrennten Fragmente b) und c) aufweist.

3. Verfahren nach einem der Ansprüche 1 und 2, **dadurch gekennzeichnet, dass** die Separierung eine Sedimentierung einer Mischung der abgetrennten Fragmente b) und c), die vorab von der basischen Lösung separiert wurden, in einer Sedimentierungsflüssigkeit, in der die separierten Nicht-Verbundglas-Fragmente b) sich ablagern und die separierten Fragmente aus nicht-glasförmigem Material c) aufschwimmen, und eine separate Gewinnung der abgetrennten Fragmente b) und der abgetrennten Fragmente c) aufweist.

4. Verfahren nach Anspruch 3, **dadurch gekennzeichnet, dass** die oben genannte separate Gewinnung ein Isolieren der Sedimentierungsflüssigkeit, die mit den gewonnenen abgetrennten Fragmenten b) und jeweils den gewonnenen abgetrennten Fragmenten c) mitgeführt wurde, aufweist, und dass das Verfahren außerdem ein eventuelles Rückführen der isolierten Sedimentierungsflüssigkeit zu dieser Sedimentierung umfasst.

5. Verfahren nach einem der Ansprüche 1 bis 4, **dadurch gekennzeichnet, dass** es ein Rückführen der aus der Separierung stammenden, basischen Lösung zum Angriff des Verbundglases, in Fragmente, aufweist.

6. Verfahren nach einem der Ansprüche 1 bis 5, **dadurch gekennzeichnet, dass** es den Angriff des Verbundglases in Fragmenten durch eine wässrige basische Lösung unter einem Dampfdruck von wenigstens 8 Bar, vorteilhafterweise 10 bis 20 Bar, vorzugsweise etwa 15 Bar, und bei einer Temperatur zwischen 180°C und einer Abbautemperatur des Glases oder des nicht-glasförmigen Materials, vorteilhaft etwa 200°C und ein Rühren des Angriffsmilieus während des Angriffs aufweist.

7. Verfahren nach einem der Ansprüche 1 bis 6, **dadurch gekennzeichnet, dass** die basische Angriffs-Lösung eine wässrige 5-molare bis 15-molare NaOH-Lösung, vorzugsweise etwa 10-molar ist.

8. Verfahren nach einem der Ansprüche 1 bis 7, **dadurch gekennzeichnet, dass** es die genannte Neutralisierung einer Mischung der abgetrennten Fragmente b) und c), die vorab von der basischen Lösung separiert wurden, durch eine Lösung, die mit Säure verdünnt wurde, die gegenüber dem Glas und dem nicht-glasförmigen Material nicht aggressiv ist, aufweist.

9. Einrichtung zum Einsetzen des Verfahrens zur Behandlung von Verbundglas nach einem der Ansprüche 1 bis 8, **dadurch gekennzeichnet, dass** sie aufweist:
- eine Vorrichtung zur Fragmentierung (16) von Verbundglas, die in der Lage ist, dieses in Verbundglasstücke zu zerkleinern,
- eine Quelle (7) basischer Lösung zum Angriff,
- einen Reaktor (20), in den die Verbundglasstücke, die aus der Fragmentierungsvorrichtung (16) stammen, und eine basische Lösung zum Angriff, die aus der Quelle (7) kommt, eingeführt werden, und der, in geschlossener Stellung, erhitzt und unter Druck gesetzt werden kann, derart, dass die basische Lösung ein Angriffmilieu bilden kann, wo eine Abtrennung, in allen Fragmenten, die aus der Fragmentierungsvorrichtung stammen, von Nicht-Verbundglasfragmenten und Fragmenten des nicht-glasförmigen Materials stattfindet,
- eine Vorrichtung zum Separieren (31, 46, 50, 56), die es ermöglicht, a) die basische Lösung, b) die abgetrennten Nicht-Verbundglas-Fragmente, die einen Angriff durch die basische Lösung erfahren haben, und c) die abgetrennten Fragmente des nicht-glasförmigen, transparenten Materials, das einen Angriff durch die basische Lösung erfahren hat, zu separieren, und
- eine Quelle (40) eines Neutralisierungsmittels, das eine Neutralisierung der abgetrennten Fragmente b) und c) vor ihrem eventuellen Rückführen oder Wiederverwerten ermöglicht.

10. Einrichtung nach Anspruch 9, **dadurch gekennzeichnet, dass** der Reaktor (20) eine erste verschließbare Öffnung aufweist, und dass die Separiervorrichtung einen Filter (31) aufweist, der in dem Reaktor vor der ersten Öffnung angeordnet ist, und der in Offenstellung der ersten Öffnung fähig ist, das Angriffsmilieu zu separieren, einerseits in die basische Lösung in Form eines aus dem Reaktor evakuierten Filtrats und andererseits in die abgetrennten Fragmente aus Nicht-Verbundglas b) und die abgetrennten Fragmente aus nicht-glasförmigem Material c), die im Inneren des Reaktors gehalten werden.

11. Einrichtung nach Anspruch 9 oder 10, **dadurch gekennzeichnet, dass** der Reaktor (20) eine zweite verschließbare Öffnung (32) aufweist, durch die die Verbundglasfragmente in den Reaktor eingeführt werden können und eine Mischung aus abgetrennten Fragmenten b) und c) aus diesem herausgeführt werden kann.

12. Einrichtung nach einem der Ansprüche 9 bis 11, **dadurch gekennzeichnet, dass** die Separiervorrichtung eine Sedimentierungswanne (46) aufweist, die eine Sedimentierungsflüssigkeit enthält, in die eine Mischung von abgetrennten Fragmenten b) und c) eingeführt ist, die aus dem Reaktor (20) stammen und in der die abgetrennten Fragmente aus Nicht-Verbundglas b) sich ablagern und die abgetrennten Fragmente aus nicht-glasförmigem Material c) aufschwimmen.

13. Einrichtung nach Anspruch 12, **dadurch gekennzeichnet, dass** die Sedimentierungswanne (46), in ihrem oberen Teil, eine Leitung zum Abführen (49) der aufschwimmenden, abgetrennten Fragmente c) und von Sedimentierungsflüssigkeit aufweist, die in Verbindung steht mit einer Separiervorrichtung (50), die die abgetrennten Fragmente c) aus der Sedimentierungsflüssigkeit, in der sie aufschwimmen, extrahieren kann.

14. Einrichtung nach einem der Ansprüche 12 und 13, **dadurch gekennzeichnet, dass** die Sedimentierungswanne (46) auf dem Boden eine verschließbare Öffnung aufweist, durch die die abgelagerten, separierten Fragmente b) und Sedimentierungsflüssigkeit passieren können, in Offenstellung der Öffnung, und die in Verbindung steht mit einer Separiervorrichtung (56), die die abgetrennten Fragmente b) aus der Sedimentierungsflüssigkeit extrahieren kann.

15. Einrichtung nach einem der Ansprüche 9 bis 14, **dadurch gekennzeichnet, dass** die Quelle von Neutralisierungsmittel eine Wanne (40) ist, die eine wässrige Lösung von Säure, die gegenüber dem Glas und dem nicht-glasförmigen Material nicht aggressiv ist, enthält, und die mit dem Reaktor in Verbindung gebracht werden kann nach der Separierung der basischen Lösung a), ausgehend von dem Angriffsmilieu.
